# EUROPEAN PATENT APPLICATION

(11) **EP 4 718 047 A1**
(43) Date of publication of application: **01.04.2026**
(21) Application number: 24383049.4
(22) Date of filing: 30.09.2024
(51) Int. Cl.: G01L 1/26, G01L 1/24

(54) **LOAD CELL FOR TRANSFORMER AND METHOD FOR MANUFACTURING A LOAD CELL FOR A TRANSFORMER**

(71) Applicant: Hitachi Energy Ltd, 8050 Zürich (CH)
(72) Inventor: De La Vega-Hazas Álvarez-Barón, Alfredo, 39005 Santander (ES); Aguirre Gimenez, Miguel, 14011 Córdoba (ES); Muñoz Ruiz, Marta Isidora, 14006 Córdoba (ES); Ruiz Rodriguez, Cayetano, 23400 Ubeda (ES)
(74) Representative: Epping - Hermann - Fischer

(57) **Abstract**

A load cell (1) for measuring forces in a transformer, comprises a measuring portion (4) and a sensor (5) for measuring a deformation of the measuring portion (4), and comprising a load cell housing (2), wherein the measuring portion (4) and the sensor (5) is embedded in the load cell housing (2), wherein the load cell housing (2) comprises at least one supporting structure (13) for limiting a force exerted on the deformable portion (4).

## Description

The present disclosure relates to a load cell for a transformer. The transformer may be a power transformer. The load cell may be configured for measuring forces in an active part of the transformer. The forces may be forces in a winding, a core, or in another region of the active part such as a clamping system.

In transformers, winding axial forces may occur when high current flows through the transformer windings. Due to the interaction of magnetic fields generated by the current, mechanical forces occur in the windings. Large dynamic winding axial forces may appear particularly during short circuiting events.

In addition to that, the transformer windings are commonly secured in place by a winding clamping system, exerting a static clamping force on the windings.

The static and dynamic forces exerted on the windings are an important factor in the integrity of the transformer. By monitoring these forces, mechanical stresses in the transformer can be determined. In addition to that, the winding clamping system can be adjusted to the measured forces. Furthermore, the theoretical calculation of the axial winding forces can be improved by a comparison with the measured forces, allowing predictions on the status of the transformer.

Embodiments of the disclosure relate to an improved load cell for a transformer.

According to a first aspect, a load cell for measuring forces in a transformer comprises a measuring portion and a sensor for measuring a deformation of the measuring portion. The load cell comprises a load cell housing, wherein the measuring portion and the sensor is embedded in the load cell housing. The load cell housing comprises at least one supporting structure for limiting a force exerted on the deformable portion.

The load cell may be configured for measuring forces in an active part of a transformer. The forces may be forces in or generated by the windings and/or the core, for example. The forces may be also forces in or generated by a clamping system of the windings and/or the core. The forces may be axial forces, in particular along a direction of a winding axis of the windings.

The transformer may be a power transformer. The load cell may be configured to be positioned in or near an active part of the transformer. The active part of the transformer may be positioned in a tank filled by an insulating liquid such as an insulating oil. The axial winding forces may occur in the form of dynamic forces in case of short-circuiting or as static forces due to a clamping of transformer windings.

The measuring portion may be configured to expand when the load cell is compressed in an axial direction. The expansion of the measuring portion may be perpendicular to the axial direction.

The sensor element may be a fiber optic sensor. A fiber optic sensor is particularly suitable for use in high-voltage components because of the signal transmission by light instead of electric currents.

The load cell housing may be formed from an insulating material. As an example, the insulating material may be a polymeric material. The insulating material allows the load cell to be positioned near electrically active components of the transformer.

The load cell housing may comprise an upper portion and a lower portion, wherein the measuring portion is positioned between the upper portion and the lower portion. Each of the upper portion and the lower portion may comprise a plateshaped portion. The upper portion and the lower portion may be formed from a rigid material. The upper portion and the lower portion may comprise plain outer surfaces. The axial forces to be measured may act on the plain outer surfaces. The upper portion and the lower portion ensure that the load is distributed evenly in the load cell. The load cell may be a two-part housing, formed by the upper portion and the lower portion.

The supporting structure may provide formation of a gap between areas of the upper portion and the lower portion.

The supporting structure serves to adjust the forces acting on the measuring portion and/or the sensor when a compression force acts on the load cell housing. Thereby an excessive force on the measuring portion and/or the sensor can be avoided. As an example, the structure, extension and/or material of the supporting structure may be adjusted to arrive at a desired range of force.

The supporting structure may be integrally formed with the lower portion and or the upper portion. It is also possible that the supporting structure may be provided as one or more separate parts and assembled with the lower portion and the upper portion.

The supporting structure may surround the measuring portion. As an example, the supporting structure may be formed as a circular ring or a rectangular frame enclosing the measuring portion. It is also possible that the supporting structure is formed by a plurality of separate elements with gaps formed between the elements. As an example, the supporting structure may be formed by a plurality of pillars.

The measuring portion and the sensor may be provided as parts of a sensing element assembled with the load cell housing. The sensing element may be shaped as a disc, for example.

It is also possible that the measuring portion is provided in the shape of a pillar. As an example, the measuring portion may be provided as a central pillar and the supporting structure may be provided as further pillars surrounding the central pillar.

According to a further aspect, a transformer comprises a load cell for measuring forces acting in the transformer. The load cell may comprise any structural and functional features of the load cell described in the foregoing. The transformer may comprise at least one winding wound around a core. The load cell may be configured for measuring forces in an active part of the transformer. The forces may be axial winding forces, for example. The load cell may be positioned near the top or bottom of winding. As an example, the load cell may be positioned between a clamping system and the winding.

According to a further aspect, a method for manufacturing a load cell is disclosed. The load cell may comprise any structural and functional characteristics of the load cell described in the foregoing. The method comprises providing an upper portion, a lower portion, a measuring portion and a sensor, arranging the measuring portion and the sensor on the lower portion or on the upper portion and assembling the upper portion with the lower portion. The supporting structure may be an integral part of the lower portion and/or the upper portion or may be assembled with the lower portion and/or the upper portion.

The present disclosure comprises several aspects and embodiments. Every feature described with respect to one of the aspects and embodiments is also disclosed herein with respect to the other aspects and embodiments, even if the respective feature is not explicitly mentioned in this context.

Further features, refinements and expediencies become apparent from the following description of the exemplary embodiments in connection with the figures. In the figures, elements of the same structure and/or functionality may be referenced by the same reference signs. It is to be understood that the embodiments shown in the figures are illustrative representations and are not necessarily drawn to scale.
Figure 1A shows an embodiment of a load cell in a perspective sectional view,
Figure 1B shows the load cell of Fig. 1A in a disassembled view,
Figures 2A-2D show steps in manufacturing the load cell of Fig. 1A,
Figure 3A shows a further embodiment of a load cell in a in a partially disassembled, perspective view,
Figure 3B shows a lower portion of the load cell of Fig. 2A,
Figure 3C shows an upper portion of the load cell of Fig. 2A,
Figures 4A, 4B and 4C show a further embodiment of a load cell in perspective view, a longitudinal sectional view and a cross sectional view,
Figure 5 shows an embodiment of a transformer comprising a load cell.

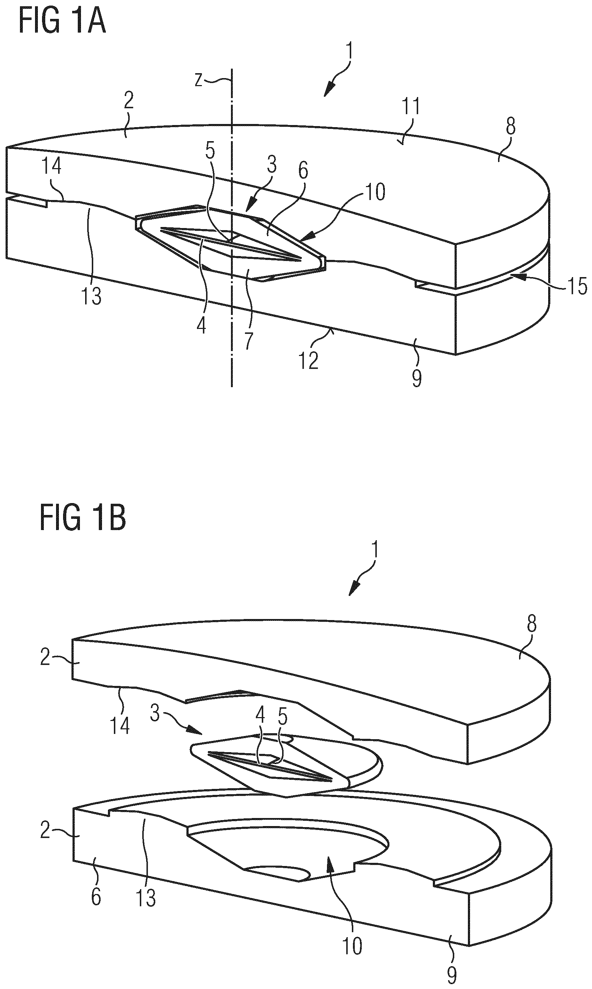

Figures 1A and 1B show an embodiment of a load cell 1 for a transformer in a perspective sectional view and an exploded view, respectively. The load cell1 may be configured for measuring forces in an active part of the transformer. The transformer may be a large power transformer, for example. The transformer may be a three-phase transformer, with a core comprising three limbs, wherein the windings for each phase are wound around one of the limbs.

The load cell 1 comprises a load cell housing 2, in which a sensing element 3 is positioned. The sensing element 3 comprises a deformable measuring portion 4 and a sensor 5 for measuring the deformation of the measuring portion 4. In the shown embodiment, the measuring portion 4 extends in a plane perpendicular to a z-axis when compressive forces act on the load cell 1 and, thereby on the sensing element 3, along the z-axis.

The sensor 5 may be a fiber optic sensor. A fiber optic sensor is particularly suitable for use in high-voltage components because the signals are transmitted by light and not be electric currents. The fiber optic sensor may use White Light Polarization Interferometry (WLPI) for detecting changes in the measuring portion 4. Such a sensor allows temperature-independent measurements. It is also possible to use a Fiber Bragg Grating Sensor that uses the principle of Bragg diffraction for measuring a deformation.

In the shown embodiment, the sensing element 3 is provided as a separate element and is assembled with the load cell housing 2 for forming the load cell 1. It is also possible that the measuring portion 3 is integrally formed with the load cell housing 2. The sensor 5 can be embedded in the load cell housing 2.

The load cell housing 2 is made from an insulating material to ensure electrical insulation and enable positioning the load cell housing 2 in the active part of a transformer. As an example, the insulating material may be a polymeric material. Furthermore, the material may be suitable for oilimmersion .

The sensing element 3 has the shape of a disc comprising an upper part 6, a lower part 7 and a membrane part, which forms the measuring portion 4. The upper part 6, the measuring portion 4 and the lower part 7 are connected to each other circumferentially. The upper part 6, the measuring portion 4 and the lower part 7 have a distance from each other in a central section. When the sensing element 3 is axially compressed, the centers of the upper part 6 and the lower part 7 move towards each other, causing an extension of the measuring portion 4 in the x-y-plane, perpendicular to the z-axis. This extension is measured by the sensor 5. When the axial force is removed or reduced to its original value, the sensing element 3 elastically returns to its original shape.

The parts of the sensing element 3 may be electrically insulating. As an example, a ceramic material such as alumina is used.

The sensing element 3 is embedded in the load cell housing 2. The load cell housing 2 protects the sensing element 3 and, thereby the measuring portion 4 and the sensor 5 from being damaged by excessive compression forces.

The load cell housing 2 has an upper portion 8 and a lower portion 9. The sensing element 3 is positioned between the upper portion 8 and the lower portion 9, in a recess 10 formed in the upper portion 8 and the lower portion 9. Both the upper portion 8 and the lower portion 9 have the shape of a plate with plan outer surfaces 11, 12. The upper portion 8 and the lower portion 9 are rigid to ensure that the load is distributed evenly in the load cell 1. As an example, the load cell housing 2 ensures that the sensing element 3 experience forces only along the z-axis and not in a direction oblique to the z-axis. Thereby, a correct functioning and precise measurement in different boundary conditions is ensured.

The load cell housing 2 comprises a supporting structure 13 being positioned between the upper portion 8 and the lower portion 9 and forming the connection between the upper portion 8 and the lower portion 9. In the shown embodiment, the supporting structure 13 is in the shape of a ring and forms a raised part of the lower portion 9. The upper portion 8 comprises a recess 14 for positioning the supporting structure 13. The recess 14 has a smaller height than the supporting structure 13 such that the supporting structure 13 is not fully embedded in the recess 14 but merely maintained in its position.

The supporting structure 13 is an integral portion of the lower portion 9. It is also possible that the supporting structure 13 is a separate element and attached to the lower portion 9. Furthermore, it is also possible that the upper portion 8 comprises the raised supporting structure 13 or that both the upper portion 8 and the lower portion 9 comprise a raised supporting structure 13.

The supporting structure 13 may comprise the same material or a different material than the upper portion 8 and the lower portion 9. The supporting structure 13 may comprise a material with a higher compressibility than the upper portion 8 and the lower portion 9.

The supporting structure 13 encircles the sensing element 3 and is adjacent to the recess 10 for the sensing element 3. The supporting structure 13 does not extend to a lateral area of the load cell housing 2. Thereby, a circumferential gap 15 exists between the upper portion 8 and the lower portion 9. The gap 15 is unfilled. The gap 15 may be filled by insulating liquid when positioned in a transformer. The supporting structure 13 can be also denoted as a spacing structure for providing a defined spacing between the upper portion 8 and the lower portion 9.

When a compressive force is applied between the upper portion 8 and the lower portion 9 along the z-axis, the supporting structure 13 is pressed towards the upper portion 8 and takes up a defined amount of the compressive force. Thereby, the compressive force acting on the sensing element 3 can be calibrated by the extension and compressive characteristics of the supporting structure 13. The compressive force can be calibrated such that the force applied to the sensing element 3, and thereby to the measuring portion 4, is sufficient to allow a precise measuring while a destruction of the sensing element 3 will be prevented.

The signals provided by the sensor 5 can be registered by a transducer, transferring the optical signals to electrical signals. The transducer may be capable of measuring signals of at least 1 kHz. A data processing algorithm can then translate the strain measurement data into forces applied on the load cell 1.

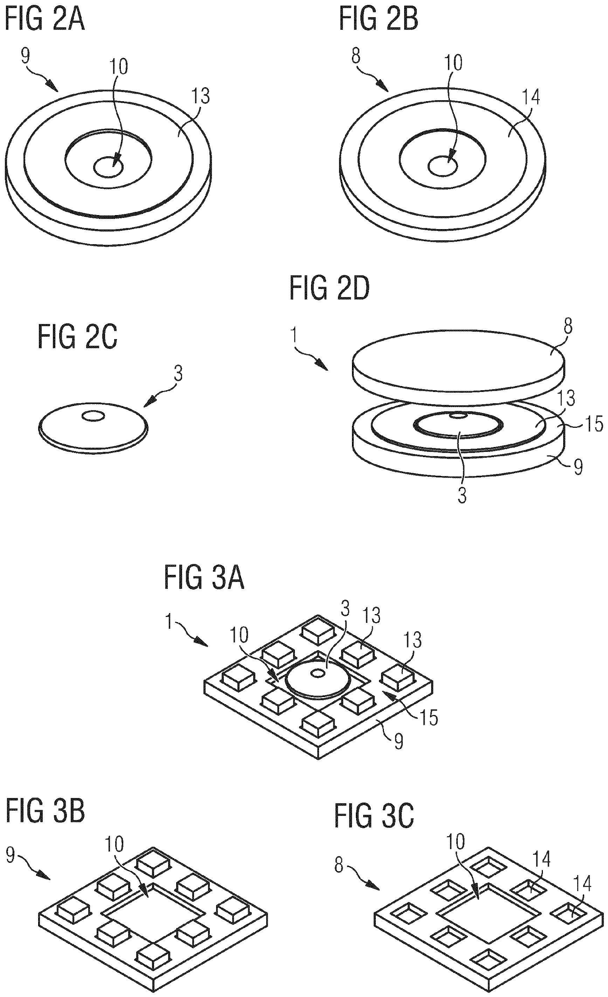

Figures 2A-2D show steps in a method of manufacturing the load cell of Figs. 1A and 1B.

Fig. 2A shows the lower portion 9 provided as a separate part. Fig. 2B shows the upper portion 8 provided as a separate part. Fig. 2C shows the sensing element 3 provided as a separate part.

Fig. 2D shows the sensing element 3 assembled with the lower portion 9. The sensing element 3 is positioned in the circular recess 10 of the lower portion 9. After that, the upper portion 8 is assembled with the lower portion 9.

Figures 3A, 3B and 3C shows a further embodiment of a load cell 1 in disassembled views. The embodiment is like the embodiment of Fig. 1A but differs in the shape of the upper portion 8, the lower portion 9 and the supporting structure 13.

Fig. 3A shows a lower portion 8 with a sensing element 5 positioned in a central recess 10. The sensing element 5 can be configured as in the preceding embodiments. Fig. 3B shows the lower portion 8 provided as a separate part before assembly with the sensing element 5. Fig. 3C shows the upper portion 8 as a separate part before assembly with the lower portion 9. The assembly of the parts corresponds to the assembly disclosed in Figs. 2A to 2D.

In this embodiment, the upper portion 8 and the lower portion 9 have a rectangular shape. The load cell housing 2 thus has a shape of a rectangular plate. The recess 10 for positioning the sensing element 3 has a rectangular circumference. However, it is also possible to provide a circular recess as in the foregoing embodiment.

The supporting structure 10 circumferentially surrounds the sensing element 3. In contrast to the foregoing embodiment, the supporting structure 10 is formed from a plurality of pillars. Furthermore, the supporting structure 10 is arranged in the shape of a rectangle, near the circumference of the load cell housing 2.

The upper portion 8 comprises a plurality of recesses for partially accommodating the pillars. Also in this embodiment, the supporting structure 10 ensures that the load cell housing 2 is provided with a gap 15 between the upper portion 8 and the lower portion 9. In this case, a gap 15 is located between the pillars of the supporting structure 10. Furthermore, the gap 15 extends also circumferentially at a lateral edge of the lower portion 8.

Also in this embodiment, the compression force acting on the sensing element 15 can be adjusted by the supporting structure 13. As an example, the number of pillars, the extension of the pillars and the material of the pillars can be selected.

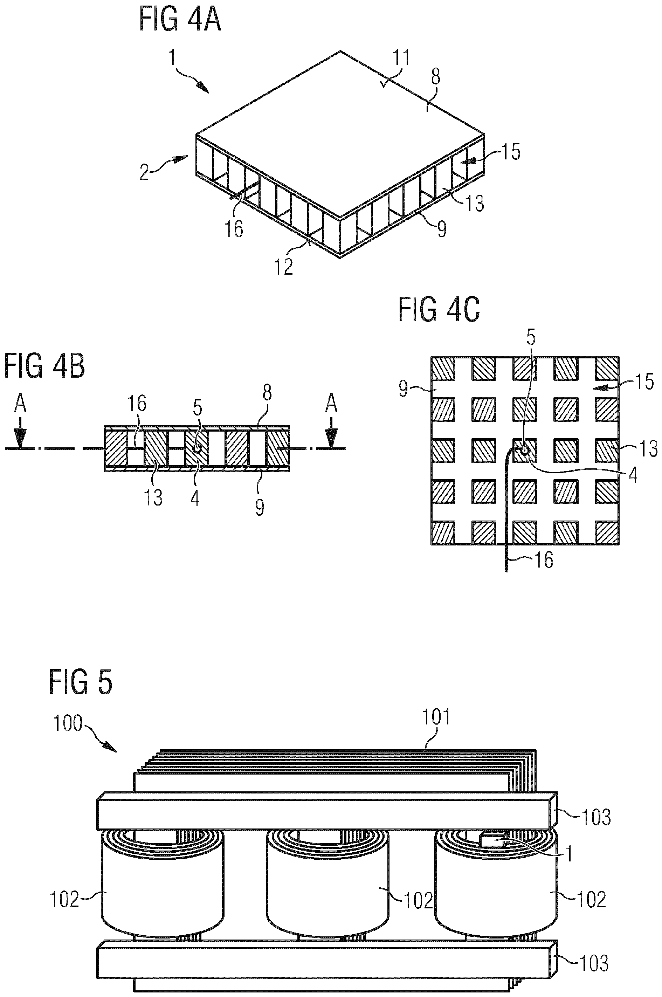

Figures 4A, 4B and 4C show a further embodiment of a load cell 1 in perspective view, a longitudinal sectional view and a cross sectional view, respectively. The cross-sectional view of Fig. 4C is at the position indicated with A-A in Fig. 4B.

Also in this embodiment, the load cell 1 comprises a load cell housing 2 with an upper portion 8 and a lower portion 9. The upper portion 8 and the lower portion 9 have plain outer surfaces 11, 12 and are in the form of rigid plates.

The load cell 1 has a supporting structure 13 formed as a plurality of pillars, wherein gaps are provided between the pillars. The pillars are arranged in the form of several rows and columns. A gap 15 is provided between the pillars and, thus, also between the upper portion 8 and the lower portion 9. In this embodiment, the gap 15 does not extend in a lateral edge region but the supporting structure 13 reaches the lateral edge. The material of the load cell housing 2 may be the same as in the foregoing embodiments.

A measuring portion 4 is formed as a central pillar. The central pillars can be of the same structure and material of the pillars of the supporting structure 13 which encircle the central pillars. It is also possible that the central pillars has a different structure and/or a different material than the supporting structure 13.

A sensor 5 is positioned at or near or inside the measuring portion 4 for measuring the deformation during application of an axial compressive force on the load cell 1. The measuring portion 4 may comprise a recess for positioning the sensor 5. The sensor 5 may measure an extension of the measuring portion 4 in a lateral direction.

The sensor 5 may be a fiber optic sensor with a connector 16 to a transducer and a data acquisition system. The connector 16 may be a fiber optic connector. A similar connector 16 may be present also in the other embodiments.

Also in this embodiment, the supporting structure 13 determines the forces acting on the measuring portion 4 and the sensor 5. The number of pillars, the extension of the pillars and the material of the pillars can be selected to achieve a desired compressive force.

The supporting structure 13 may be attached to the lower portion 8 and the upper portion 9. It is also possible that the supporting structure 13 is integral with the lower portion 8 and/or the upper portion 9.

In manufacturing the load cell 1, the upper portion 8, the lower portion 9 and the sensor 5 may be provided. A Central pillar for forming the measuring portion 4 may be attached to the lower portion 9. The sensor element 5 can be attached to the measuring portion 4 before attaching the measuring portion 4 to the lower portion 9 or thereafter. Then, the further pillars of the supporting structure 13 are attached to the lower portion 9. As the last step, the upper portion 8 is attached to the supporting structure 13.

In a further embodiment, a sensing element 3 as shown in Fig. 2C can be located at the center of the load cell housing 2 instead of the pillar-shaped measuring portion.

Figure 5 shows a transformer active part 100 comprising a load cell 1 for measuring axial forces. The transformer may be a power transformer. The transformer active part 100 may be positioned in a tank filled with an insulating liquid. The transformer is a three-phase transformer, with a core 101 comprising three limbs and windings 102 wound around each of the limbs.

The load cell 1 may be positioned between a beam 103 positioned above or below a winding 102 and the winding 102. The beam 103 may be part of a clamping system for clamping components of the transformer active part 100 such as the windings 102 and the core 101. The load cell 1 is configured to measure winding axial forces which may occur dynamically during short circuiting or static axial forces exerted by the clamping system on the windings 102. Also other axial forces such as core forces or clamping forces may be measured by the load cell 1.

The load cell 1 may be also positioned at other positions. For example, the load cell 1 may be positioned within one of the windings 102 or above the upper ones of the beams 103 or below the lower ones of the beams 103. It is also possible that a load cell 1 is provided for each of the phases.

### Reference Signs

- 1: load cell
- 2: load cell housing
- 3: sensing element
- 4: measuring portion
- 5: sensor
- 6: upper part of sensing element
- 7: lower part of sensing element
- 8: upper portion of load cell housing
- 9: lower portion of load cell housing
- 10: recess for sensing element
- 11: outer surface upper portion
- 12: outer surface lower portion
- 13: supporting structure
- 14: recess for supporting structure
- 15: gap
- 16: connector
- 100: transformer active part
- 101: core
- 102: winding
- 103: beam

- z: axial direction

## Claims

1. A load cell (1) for measuring forces in a transformer, comprising a measuring portion (4) and a sensor (5) for measuring a deformation of the measuring portion (4),
and comprising a load cell housing (2),
wherein the measuring portion (4) and the sensor (5) is embedded in the load cell housing (2),
wherein the load cell housing (2) comprises at least one supporting structure (13) for limiting a force exerted on the measuring portion (4).

2. The load cell (1) of claim 1,
wherein the sensor (5) is a fiber optic sensor.

3. The load cell (1) of any of the preceding claims,
wherein the measuring portion (4) is configured to expand in a direction perpendicular to a direction of the force exerted on the load cell housing (2).

4. The load cell (1) of any of the preceding claims,
wherein the measuring portion (4) and the sensor (3) are parts of a sensing element (3) assembled with the load cell housing (2).

5. The load cell (1) of claim 4,
wherein the sensing element (3) comprises an upper part (6) and a lower part (7) configured to be pressed towards each other by a force exerted on the load cell housing (2),
wherein the measuring portion (4) is located between the upper part (6) and the lower part (7).

6. The load cell (1) of any of the preceding claims,
wherein the load cell housing (2) is formed from an insulating material.

7. The load cell (1) of any of the preceding claims,
wherein the load cell housing (2) comprises an upper portion (8) and a lower portion (9), wherein the measuring portion (4) is positioned between the upper portion (8) and the lower portion (9).

8. The load cell (1) of claim 7,
wherein the supporting structure (13) provides formation of a gap (15) in areas between the upper portion (8) and the lower portion (9).

9. The load cell (1) of any of claims 7 and 8,
wherein the supporting structure (13) is an integral part of the upper portion (8) and/or the lower portion (9).

10. The load cell (1) of any of the preceding claims,
wherein the supporting structure (13) surrounds the measuring portion (4).

11. The load cell (1) of any of the preceding claims,
wherein the supporting structure (13) is formed as circular ring or a rectangular frame.

12. The load cell (1) of any of the preceding claims,
wherein the supporting structure (13) is formed by a plurality of pillars.

13. The load cell (1) of any of claims 7 to 12,
wherein the load cell housing (2) is a two-part housing, formed by the upper portion (8) and the lower portion (9).

14. A transformer comprising the load cell (1) of any of the preceding claims, wherein the transformer comprises at least one winding (102) wound around a core (101), wherein the load cell (1) is configured for measuring forces in a transformer active part (100).

15. A method for manufacturing a load cell (1) for a transformer,
the load cell (1) comprising a deformable measuring portion (4) and a sensor (5) for measuring a deformation of the measuring portion (4),
and comprising a load cell housing (2),
wherein the measuring portion (4) and the sensor (5) is embedded in the load cell housing (2),
the load cell housing (2) comprising at least one supporting structure (10) for limiting a force exerted on the deformable portion (4),
the method comprising providing an upper portion (8) of the load cell housing (2), a lower portion (9) of the load cell housing (2) and a sensing element (3) comprising the measuring portion (4) and the sensor (5),
arranging the sensing element (3) on the lower portion (9) and assembling the upper portion (8) with the lower portion (9) .
